# EUROPEAN PATENT APPLICATION

(11) **EP 4 317 748 A1**
(43) Date of publication of application: **07.02.2024**
(21) Application number: 23774856.1
(22) Date of filing: 20.03.2023
(51) Int. Cl.: F16J 12/00, F17C 1/00, F17C 11/00

(54) **CONTAINER AND METHOD FOR MANUFACTURING CONTAINER**

(30) Priority: 25.03.2022 JP 2022049236
(71) Applicant: Samtech Corporation, Kashiwara-shi, Osaka 582-0027 (JP); Mjolnir Spaceworks Co., Ltd., Sapporo-shi, Hokkaido, 001-0021 (JP)
(72) Inventor: MISHIMA, Shinichi, Kashiwara-shi, Osaka 582-0027 (JP); SAKAGUCHI, Yoshiki, Kashiwara-shi, Osaka 582-0027 (JP)
(74) Representative: Horn Kleimann Waitzhofer Schmid-Dreyer Patent- und Rechtsanwälte PartG mbB
(86) International application number: PCT/JP2023/010843
(87) International publication number: WO 2023/182261

(57) **Abstract**

The present invention provides a container capable of stably supporting an internal structure unit while effectively suppressing the occurrence of damage, and a method for manufacturing the container. The container includes: a container main unit that includes a cylindrical base portion, dome portions that have a dome-like shape and are provided at both ends of the base portion, and a tubular first ferrule portion and a tubular second ferrule portion that have communicating holes formed at top portions of the respective dome portions to connect the inside and the outside, and are formed along the axis of the base portion; and an internal structure unit that is housed in the container main unit. The internal structure unit includes a free shaft portion provided on one end side along the axis of the base portion, and a fixed shaft portion provided on the other end side along the axis of the base portion. The free shaft portion is supported on the side of the first ferrule portion so as to be movable along the axis of the base portion. The fixed shaft portion is secured and supported in the communicating hole in the second ferrule portion via an engaging portion formed on the surface of the fixed shaft portion. At least part of the inner peripheral surface of the communicating hole in the second ferrule portion includes a plastically deformable portion to be engaged with the engaging portion.

## Description

### TECHNICAL FIELD

The present invention relates to a container and a method for manufacturing the container.

### BACKGROUND ART

Containers that house various internal structure units are known. For example, containers that house a filling member filled with a substance that occludes gas, a partition plate that prevents stir of liquid in the container, or a catalyst unit that houses a catalyst are known. As for the structure for attaching an internal structure unit (such as a filling member, a partition plate, or a catalyst unit) in such a container, a structure in which a shaft portion provided in the internal structure unit and the container are secured to each other by welding is widely used (Patent Document 1).

### PRIOR ART DOCUMENT

### PATENT DOCUMENT

Patent Document 1: JP 2008-303956 A

### SUMMARY OF THE INVENTION

### PROBLEMS TO BE SOLVED BY THE INVENTION

However, in the case of a container having an internal structure unit secured by welding, if a dimensional change occurs when the container expands due to injection of a high-pressure liquid into the container or when the container contracts due to discharge of a high-pressure liquid in the container to the outside, the internal structure unit also expands or contracts with the dimensional change, stress concentration occurs in the portion secured by welding, and damage such as fatigue failure might occur in the welded portion.

The present invention has been made to solve the above problems, and aims to provide a container capable of stably supporting an internal structure unit while effectively suppressing the occurrence of damage, and a method for manufacturing the container.

### MEANS FOR SOLVING THE PROBLEMS

The above object of the present invention is achieved by a container that includes: a container main unit that includes a cylindrical base portion, dome portions that have a dome-like shape and are provided at both ends of the base portion, and a tubular first ferrule portion and a tubular second ferrule portion that have communicating holes formed at top portions of the respective dome portions to connect the inside and the outside, and are formed along the axis of the base portion; and an internal structure unit that is housed in the container main unit. The internal structure unit includes a free shaft portion provided on one end side along the axis of the base portion, and a fixed shaft portion provided on the other end side along the axis of the base portion. The free shaft portion is supported on the side of the first ferrule portion so as to be movable along the axis of the base portion. The fixed shaft portion is secured and supported in the communicating hole in the second ferrule portion via an engaging portion formed on the surface of the fixed shaft portion. At least part of the inner peripheral surface of the communicating hole in the second ferrule portion includes a plastically deformable portion to be engaged with the engaging portion.

Also, in the container, the engaging portion is preferably a protruding member or a recessed member formed on the surface of the fixed shaft portion.

Further, the engaging portion is preferably formed in an annular shape in the circumferential direction of the fixed shaft portion.

Further, a plurality of the engaging portions is preferably formed in the axial direction of the fixed shaft portion.

Also, the above object of the present invention is achieved by a method for manufacturing a container, the method including: a main component preparing step of preparing a one-side processed container that includes a dome-shaped dome portion on one end side of a cylindrical base portion, and a tubular ferrule portion that has a communicating hole formed at a top portion of the dome portion and connecting the inside and the outside, the tubular ferrule portion being formed along the axis of the base portion, and an internal structure unit that is housed in the one-side processed container, and has a free shaft portion provided on one end side along the axis of the base portion and a fixed shaft portion provided on the other end side along the axis of the base portion; an internal structure unit supporting step of supporting the internal structure unit at both ends by housing the internal structure unit in the one-side processed container, supporting the free shaft portion of the internal structure unit on the side of the ferrule portion so as to be movable along the axis of the base portion, and temporarily supporting the fixed shaft portion of the internal structure unit; and a both-side processed container forming step of forming a both-side processed container by performing a diameter reduction process on the base portion on the opposite side from the side on which the ferrule portion of the one-side processed container is formed, and thus forming a dome-shaped dome portion that has, at its top portion, another tubular ferrule portion for supporting the fixed shaft portion of the internal structure unit with the inner peripheral surface. In this method, the both-side processed container forming step includes plastically deforming at least part of the inner peripheral surface of the another ferrule portion, to engage and secure the at least part of the inner peripheral surface of the another ferrule portion with and to an engaging portion formed on the surface of the fixed shaft portion.

Further, the above object of the present invention is achieved by a method for manufacturing a container, the method including: a main component preparing step of preparing a one-side processed container that includes a dome-shaped dome portion on one end side of a cylindrical base portion, and a tubular ferrule portion that has a communicating hole formed at a top portion of the dome portion and connecting inside and outside, the tubular ferrule portion being formed along an axis of the base portion, and an internal structure unit that is housed in the one-side processed container, and has a free shaft portion provided on one end side along the axis of the base portion and a fixed shaft portion provided on the other end side along the axis of the base portion; an internal structure unit supporting step of supporting the internal structure unit at both ends by housing the internal structure unit in the one-side processed container, inserting the fixed shaft portion of the internal structure unit into the communicating hole in the ferrule portion, and temporarily supporting the free end portion of the internal structure unit; a fixed shaft portion securing step of securing and supporting the fixed shaft portion of the internal structure unit with the inner peripheral surface of the ferrule portion by performing a diameter reduction process on the ferrule portion; and a both-side processed container forming step of forming a both-side processed container by performing a diameter reduction process on the base portion on the opposite side from the side on which the ferrule portion of the one-side processed container is formed, and thus forming a dome-shaped dome portion that has, at the top portion, another tubular ferrule portion for supporting the free shaft portion of the internal structure unit so as to be movable along the axis of the base portion. In this method, the fixed shaft portion securing step includes plastically deforming at least part of the inner peripheral surface of the ferrule portion, to engage and secure the at least part of the inner peripheral surface of the ferrule portion with and to an engaging portion formed on the surface of the fixed shaft portion.

Further, the above object of the present invention is achieved by a method for manufacturing a container, the method including: a main component preparing step of preparing a one-side processed container that includes a dome-shaped dome portion on one end side of a cylindrical base portion, and a tubular ferrule portion that has a communicating hole formed at a top portion of the dome portion and connecting inside and outside, the tubular ferrule portion being formed along an axis of the base portion, an internal structure unit that is housed in the one-side processed container, and has a free shaft portion provided on one end side along the axis of the base portion and a fixed shaft portion provided on the other end side along the axis of the base portion, and a holding plug that is movable relative to the free shaft portion; an internal structure unit supporting step of supporting the internal structure unit at both ends by housing the internal structure unit in the one-side processed container, inserting the fixed shaft portion of the internal structure unit into the communicating hole in the ferrule portion, and temporarily supporting the free end portion of the internal structure unit; a fixed shaft portion securing step of securing and supporting the fixed shaft portion of the internal structure unit with the inner peripheral surface of the ferrule portion by performing a diameter reduction process on the ferrule portion; a holding plug installing step of installing the holding plug in the free shaft portion of the internal structure unit in a relatively movable manner; and a both-side processed container forming step of forming a both-side processed container by performing a diameter reduction process on the base portion on the opposite side from the side on which the ferrule portion of the one-side processed container is formed, and thus forming a dome-shaped dome portion that has, at the top portion, another tubular ferrule portion for supporting the holding plug installed in the free shaft portion of the internal structure unit with the inner peripheral surface. In this method, the fixed shaft portion securing step includes plastically deforming at least part of the inner peripheral surface of the ferrule portion, to engage and secure the at least part of the inner peripheral surface of the ferrule portion with and to an engaging portion formed on the surface of the fixed shaft portion.

Also, in the method for manufacturing the container, the engaging portion is preferably a protruding member or a recessed member formed on the surface of the fixed shaft portion.

Further, the engaging portion is preferably formed in an annular shape in the circumferential direction of the fixed shaft portion.

Further, a plurality of the engaging portions is preferably formed in the axial direction of the fixed shaft portion.

### EFFECTS OF THE INVENTION

According to the present invention, it is possible to provide a container capable of stably supporting an internal structure unit while effectively suppressing the occurrence of damage, and a method for manufacturing the container.

### BRIEF DESCRIPTION OF THE DRAWINGS

Fig. 1 is a schematic cross-sectional configuration diagram illustrating an example of a container according to the present invention.
Figs. 2(a) and 2(b) are schematic cross-sectional configuration diagrams each illustrating an example of an internal structure unit housed in the container according to the present invention.
Figs. 3(a) and 3(b) are enlarged schematic cross-sectional configuration diagrams of relevant parts for explaining the structure of a free shaft portion in a holding plug and the internal structure unit included in the container illustrated in Fig. 1.
Fig. 4 is an enlarged schematic cross-sectional configuration diagrams of relevant parts for explaining the structure of a fixed shaft portion in a second ferrule portion and the internal structure unit included in the container illustrated in Fig. 1.
Fig. 5 is a block diagram for explaining a method for manufacturing a container according to the present invention.
Fig. 6 is an explanatory diagram for explaining a method of forming a one-side processed container.
Fig. 7(a) is an explanatory diagram for explaining an internal structure unit supporting step in the method for manufacturing the container according to the present invention. Fig. 7(b) is an explanatory diagram for explaining a both-side processed container forming step in the method for manufacturing the container according to the present invention.
Fig. 8 is a schematic cross-sectional configuration diagram for explaining a modification of the holding plug of the container according to the present invention.
Figs. 9(a) and 9(b) are schematic cross-sectional configuration diagrams for explaining further modifications of the holding plug of the container according to the present invention.
Figs. 10(a), 10(b), and 10(c) are schematic cross-sectional configuration diagrams for explaining further modifications of engaging portions of the holding plug and the fixed shaft portion.
Fig. 11 is a block diagram for explaining another method for manufacturing a container according to the present invention.
Fig. 12 is an explanatory diagram for explaining another method for manufacturing a container according to the present invention.
Fig. 13 is a schematic enlarged cross-sectional diagram of relevant portions for explaining another modification of a container according to the present invention.
Fig. 14 is an explanatory diagram for explaining a method for manufacturing the container illustrated in Fig. 13.
Fig. 15 is an explanatory diagram for explaining another method for manufacturing the container illustrated in Fig. 13.

### EMBODIMENTS OF THE INVENTION

The following is a description of a container and a method for manufacturing the container according to the present invention, with reference to the accompanying drawings. Note that each drawing is partially enlarged or reduced to facilitate understanding of the configuration.

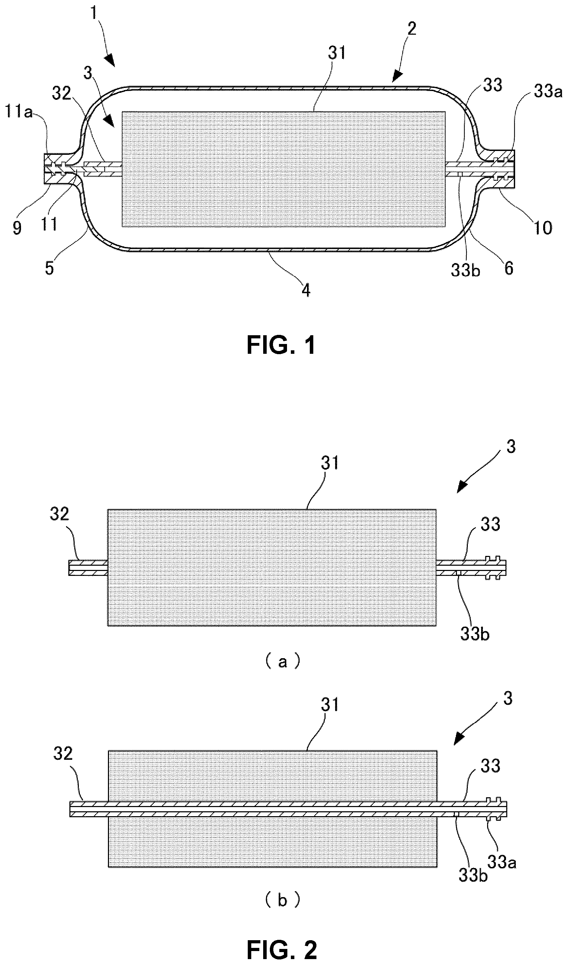

As illustrated in a schematic cross-sectional configuration diagram in Fig. 1, a container 1 according to the present invention is a container 1 including a container main unit 2 and an internal structure unit 3 housed in the container main unit 2. Here, the internal structure unit 3 housed in the container main unit 2 includes a structure main unit 31, a free shaft portion 32 provided on one end side of the structure main unit 31, and a fixed shaft portion 33 provided on the other end side. The free shaft portion 32 and the fixed shaft portion 33 are formed to extend in the axial direction of the base portion 4 of the container main unit 2. As illustrated in Fig. 2(a), the internal structure unit 3 may be a structure in which the free shaft portion 32 and the fixed shaft portion 33 protrude from one surface and the other surface of the structure main unit 31, respectively. Alternatively, as illustrated in Fig. 2(b), the internal structure unit 3 may be a structure formed by inserting and fixing the structure main unit 31 onto a single pipe-shaped member. The structure and functions of the structure main unit 31 are not limited to any particular ones, as long as the structure main unit 31 is accommodated in the container 1 when used. Examples of structures for the structure main unit 31 include a filling member filled with a substance that occludes gas, a structure unit including a partition plate that prevents stir of liquid in the container, and a catalyst unit that houses a catalyst.

The container main unit 2 included in the container 1 according to the present invention is formed as a seamless structure without a joint due to welding, bolt fastening, or the like, and has a cylindrical shape whose diameter is smaller at potions closer to both end portions. Specifically, as illustrated in Fig. 1, the container main unit 2 is designed to have: the base portion 4 having a cylindrical shape; dome portions 5 and 6 that have a dome-like shape and are provided at both ends of the base portion 4; and a first ferrule portion 9 and a second ferrule portion 10 that have a tubular shape, have communicating holes that are formed at the top portions of the respective dome portions 5 and 6 and connect the inside and the outside, and are formed along the axis of the base portion 4. Note that the container main unit 2 can be formed into a container shape by performing a diameter reduction process on a cylindrical material tube of steel, aluminum alloy, or the like.

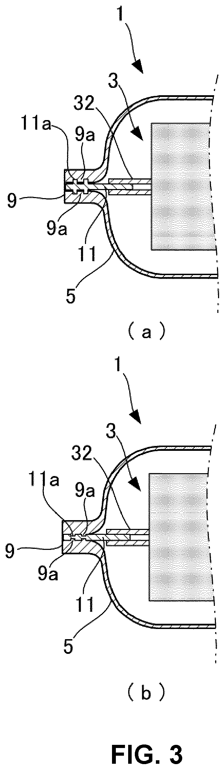

The communicating hole in the first ferrule portion 9 secures and supports a holding plug 11, and the free shaft portion 32 of the internal structure unit 3 is supported by the holding plug 11 so as to be movable (capable of relative movement) along the axis of the base portion 4 (the free end portion 32 is supported so as to be movable along the axis of the base portion 4 on the side of the first ferrule portion 9). The form of this holding plug 11 is not limited to any particular form, as long as the holding plug 11 is a structure that is secured to the communicating hole in the first ferrule portion 9 and enables the free shaft portion 32 of the internal structure unit 3 to move along the axis of the base portion 4. However, it is preferable to form the holding plug 11 in a rod-like shape having a circular cross-sectional shape, for example, as illustrated in Fig. 3(a). In a case where the holding plug 11 is formed in such a rod-like shape, for example, the free shaft portion 32 of the internal structure unit 3 is formed in a pipe-like shape, and the end portion of the holding plug 11 in the rod-like shape is inserted into and disposed in the inner hole of the pipe-like free shaft portion 32. Thus, the free shaft portion 32 of the internal structure unit 3 is supported by the holding plug 11 so as to be movable along the axis of the base portion 4.

Further, a method by which the holding plug 11 is secured to the communicating hole in the first ferrule portion 9 is not limited to any particular method, and examples thereof include a method for securing the holding plug 11 by welding and a method for securing the holding plug 11 by screwing the holding plug 11 into the communicating hole in the first ferrule portion 9. However, it is preferable to secure the holding plug 11 by the following method. That is, it is preferable to design the first ferrule portion 9 so as to have a communicating hole having an inner diameter larger than the outer diameter of the holding plug 11, and dispose and secure the holding plug 11 to the first ferrule portion 9 by inserting the holding plug 11 into the communicating hole in the first ferrule portion 9 and then radially reducing and deforming the first ferrule portion 9, for example. In particular, as illustrated in Fig. 3(a), it is preferable to form engaging portions 11a on the outer peripheral surface of the holding plug 11 that comes into contact with the first ferrule portion 9 that is radially reduced and deformed, and design the first ferrule portion 9 so that at least part of the inner peripheral surface of the communicating hole of the first ferrule portion 9 forms plastically deformable portions 9a to be engaged with the engaging portions 11a. Such engaging portions 11a may be formed as protruding members that are formed on the outer peripheral surface of the holding plug 11 and protrude outward from the outer peripheral surface as illustrated in Fig. 3(a), or may be formed as recessed members that are formed in the outer peripheral surface of the holding plug 11 as illustrated in Fig. 3(b). Also, the engaging portions 11a that are such protruding members or recessed members are preferably formed in an annular shape in the circumferential direction of the outer peripheral surface of the holding plug 11. Further, a plurality of the engaging portions 11a is preferably formed at predetermined intervals in the longitudinal direction of the holding plug 11 (the axial direction of the holding plug 11). Here, the communicating hole in the first ferrule portion 9 is preferably hermetically sealed by the holding plug 11 inserted into and secured to the communicating hole in the first ferrule portion 9. However, in a case where a configuration in which a male screw portion is formed on an outer peripheral portion of the first ferrule portion 9, and a sealing plug is screwed to the male screw portion to seal the first ferrule portion is adopted, for example, the communicating hole in the first ferrule portion 9 is not necessarily sealed by the holding plug 11.

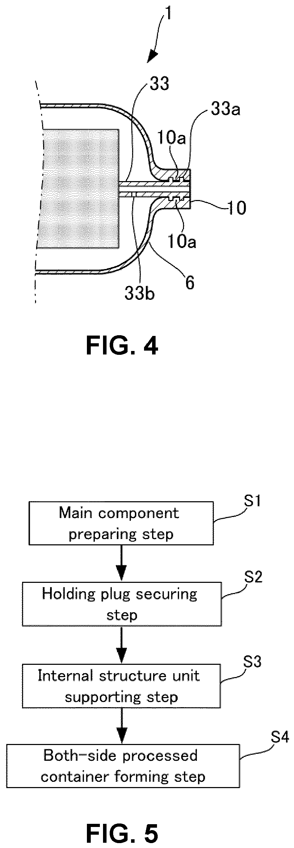

The communicating hole in the second ferrule portion 10 is a portion that has a function of supporting and securing the fixed shaft portion 33 of the internal structure unit 3. The fixed shaft portion 33 supported by and secured to the communicating hole in the second ferrule portion 10 is preferably formed as a hollow pipe-like member having a circular cross-sectional shape. As illustrated in Fig. 4, the fixed shaft portion 33 includes engaging portions 33a formed on the surface thereof, and is secured and supported in close contact with the communicating hole in the second ferrule portion 10 via the engaging portions 33a. At least part of the inner peripheral surface of the communicating hole in the second ferrule portion 10 is designed to include plastically deformable portions 10a to be engaged with the engaging portions 33a. The configuration of the engaging portions 33a formed on the surface of the fixed shaft portion 33 is similar to the configuration of the engaging portions 11a formed on the outer peripheral surface of the holding plug 11 described above, and the engaging portions 33a may be formed as protruding members that are formed on the surface of the fixed shaft portion 33 and protrude outward from the surface, or may be formed as recessed members formed in the surface of the fixed shaft portion 33. Also, such engaging portions 33a are preferably formed in an annular shape in the circumferential direction of the surface of the fixed shaft portion 33. Further, a plurality of the engaging portions is preferably formed at predetermined intervals in the axial direction of the fixed shaft portion 33.

Note that a through hole 33b is formed in a side surface of the fixed shaft portion 33 formed as a pipe-like member, and a pipe is connected, via a joint (not shown) to the second ferrule portion 10 by and to which the fixed shaft portion 33 is supported and secured. With this configuration, it is possible to supply fluid into the container 1 or discharge fluid stored in the container 1 to the outside via the pipe and the through hole 33b formed in the fixed shaft portion 33.

The container 1 according to the present invention can be manufactured by the manufacturing method described below. That is, as illustrated in a block diagram in Fig. 5, the container 1 can be manufactured by a manufacturing method that includes a main component preparing step S1, a holding plug securing step S2, an internal structure unit supporting step S3, and a both-side processed container forming step S4.

The main component preparing step S1 is a step of preparing: a one-side processed container Z3 that has a dome-shaped dome portion Z5 on one end side of a base portion Z4 having a cylindrical shape and a tubular ferrule portion Z7 that is formed along the axis of the base portion Z4 and has a communicating hole Z6 that is formed at the top portion of the dome portion Z5 and connects the inside and the outside; the holding plug 11 secured to the communicating hole Z6 in the ferrule portion Z7; and the internal structure unit 3 that is housed in the one-side processed container Z3, and has the free shaft portion 32 provided on one end side along the axis of the base portion Z4 and the fixed shaft portion 33 provided on the other end side along the axis of the base portion Z4.

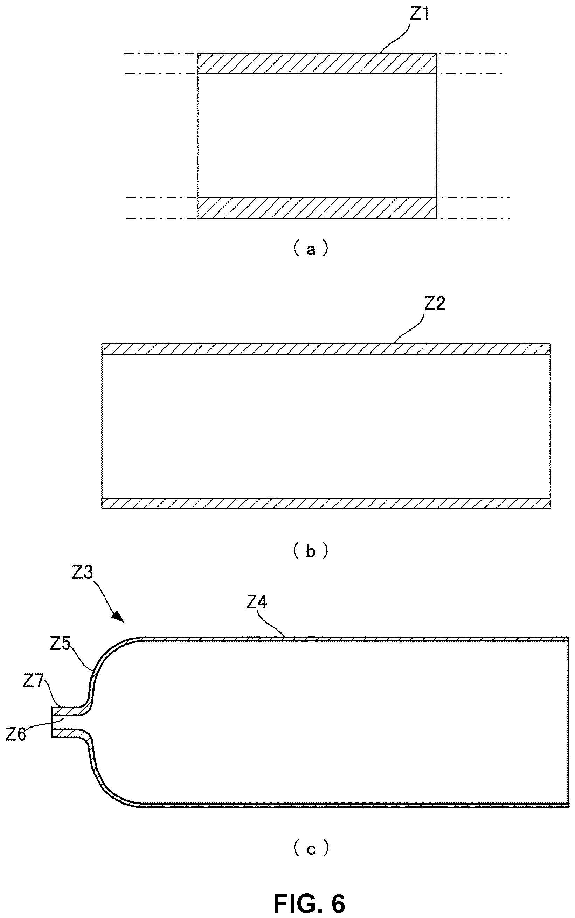

Here, as illustrated in Fig. 6, for example, the one-side processed container Z3 is obtained by externally fitting and attaching a short material tube member Z1 formed by cutting out a necessary length from a long cylindrical pipe of steel, an aluminum alloy, or the like to a mandrel (not shown), pressing the outer peripheral surface of the short material tube member Z1 with a molding roller or a ring-shaped die to squeeze the outer peripheral surface and thus form a long material tube member Z2 in which the base portion Z4 is formed, holding the outer peripheral surface of the long material tube member Z2 with a chuck device (not shown) and rotating the long material tube member Z2, and performing rolling from the vicinity of the opening end on one side to the opening end with a molding roller to form the dome portion 5 and the ferrule portion Z7. Note that the holding plug 11 and the internal structure unit 3 having the configurations as described above can be used.

The holding plug securing step S2 is a step of inserting the holding plug 11 into the communicating hole Z6 in the ferrule portion Z7 in the one-side processed container Z3, and securing the holding plug 11 therein. In this holding plug securing step S2, a method by which the holding plug 11 having a rod-like shape and a circular cross-sectional shape is inserted into the communicating hole Z6 in the ferrule portion Z7 and then securing the holding plug 11 thereto by welding, or a method by which the holding plug 11 is screwed into the communicating hole Z6 in the ferrule portion Z7 and securing the holding plug 11 to the communicating hole Z6 may be adopted. However, as illustrated in Figs. 3(a) and 3(b), it is preferable to install and secure the holding plug 11 to the ferrule portion Z7 by inserting the rod-like holding plug 11 having the engaging portions 11a (the engaging portions 11a formed as protruding members or recessed members) on the outer peripheral surface into the communicating hole Z6 in the ferrule portion Z7, and then performing a diameter reduction process such as spinning on the ferrule portion Z7 to reduce the diameter of the communicating hole Z6 in the ferrule portion Z7. As the holding plug 11 is installed and secured to the ferrule portion Z7 by such a method, part of the inner peripheral surface of the communicating hole Z6 in the ferrule portion Z7 forms plastically deformable portions Z8 to be engaged with the engaging portions 11a, so that the holding plug 11 is firmly secured to the ferrule portion Z7. Note that, when the holding plug 11 is installed in the communicating hole Z6 in the ferrule portion Z7, it is preferable to carry out the holding plug securing step S2 while supporting the holding plug 11 with a support device (not shown) separately so as not to cause positional displacement of the holding plug 11 with respect to the ferrule portion Z7.

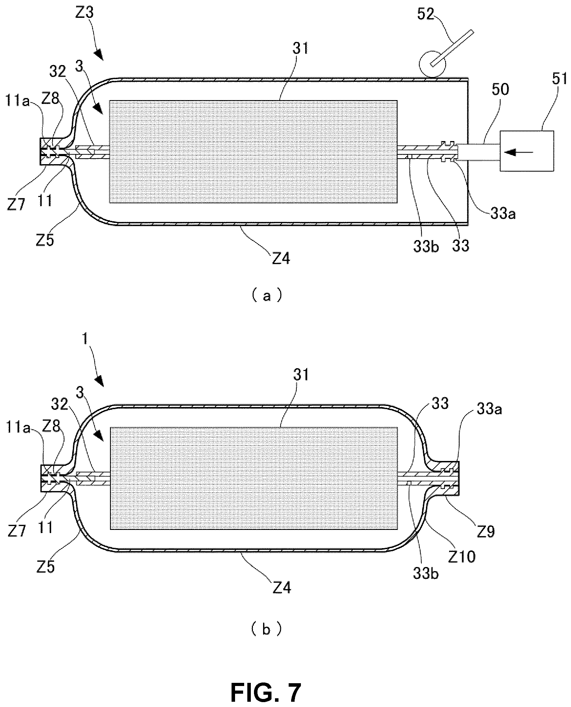

As illustrated in Fig. 7, the internal structure unit supporting step S3 is a step of housing the internal structure unit 3 in the one-side processed container Z3, supporting the free shaft portion 32 of the internal structure unit 3 on the holding plug 11 so as to be movable along the axis of the base portion Z4, temporarily supporting the fixed shaft portion 33 of the internal structure unit 3, and supporting the internal structure unit 3 at both ends. Further, the outer peripheral surface of the base portion Z4 of the one-side processed container Z3 is held by a chuck device. Here, as the holding plug 11 is formed as a rod-like member in this embodiment, the free shaft portion 32 of the internal structure unit 3 is formed in a pipe-like shape, and the holding plug 11 is inserted into the inner hole of the pipe-like free shaft portion 32. Thus, the free shaft portion 32 is supported by the holding plug 11 so as to be movable with respect to the base portion Z4. Further, the method by which the fixed shaft portion 33 of the internal structure unit 3 is temporarily supported is not limited to any particular method, but, as illustrated in Fig. 7(a), for example, it is possible to support the fixed shaft portion 33 of the internal structure unit 3 by pressing the fixed shaft portion 33 with a support rod 50 and a pressing device 51.

The both-side processed container forming step S4 is a step of forming the both-side processed container 1 by processing the remaining end surface of the one-side processed container Z3, with the internal structure unit 3 set in the base portion Z4. Specifically, using a spinning processing device 52 or the like, a diameter reduction process is performed on the base portion Z4 on the opposite side from the side on which the ferrule portion Z7 of the one-side processed container Z3 is formed. Thus, a dome-shaped dome portion Z10 having another tubular ferrule portion Z9 for supporting the fixed shaft portion 33 of the internal structure unit 3 with the inner peripheral surface at the top portion is formed. Through this both-side processed container forming step S4, the container 1 having the internal structure unit 3 therein is formed. The engaging portions 33a designed as protruding members or recessed members are provided on the surface of the fixed shaft portion 33. Therefore, when the other ferrule portion Z9 for supporting the fixed shaft portion 33 with the inner peripheral surface is formed by the diameter reduction process, part of the inner peripheral surface of the ferrule portion Z9 plastically deforms and engages with the engaging portions 33a formed on the surface of the fixed shaft portion 33. Thus, the fixed shaft portion 33 is firmly and tightly secured to the other ferrule portion Z9. Note that, as a post-process to be performed after the both-side processed container forming step S4, a heat treatment step may be performed as necessary, to increase the fatigue endurance of the container 1.

In the container 1 according to the present invention, as described above, the support structure of the container main unit 2 with respect to the internal structure unit 3 installed in the container main unit 2 is designed as a one-free-end structure (a structure in which the free shaft portion 32 of the internal structure unit 3 is movable with respect to the holding plug 11). Accordingly, it is possible to absorb the dimensional change (a change in the axial dimension of the container main unit 2) that would be caused in a case where the container main unit 2 expands due to injection of a high-pressure liquid into the container, or in a case where the container main unit 2 contracts due to discharge of a high-pressure liquid in the container to the outside. Thus, it is possible to prevent stress concentration due to the dimensional change from occurring in the first ferrule portion 9 and the second ferrule portion 10 that are portions supporting the internal structure unit 3.

Further, the engaging portions 33a formed as protruding members or recessed members are provided on the surface of the fixed shaft portion 33 of the internal structure unit 3, and at least part of the inner peripheral surface of the second ferrule portion 10 is plastically deformed and is engaged with the engaging portions 33a. Thus, the fixed shaft portion 33 and the second ferrule portion 10 are firmly and stably secured in close contact with each other, and the fixed shaft portion 33 can be reliably prevented from coming off from the second ferrule portion 10.

Likewise, the engaging portions 11a formed as protruding members or recessed members are provided on the outer peripheral surface of the holding plug 11, and at least part of the inner peripheral surface of the first ferrule portion 9 is plastically deformed and is engaged with the engaging portions 11a formed on the holding plug 11. Thus, the holding plug 11 and the first ferrule portion 9 are firmly and tightly secured to each other, and the holding plug 11 can be reliably prevented from coming off from the first ferrule portion 9.

By adopting annular members formed in the circumferential direction as the engaging portions 33a and 11a formed on the fixed shaft portion 33 and the holding plug 11, it is possible to more firmly secure the fixed shaft portion 33 and the second ferrule portion 10 to each other, and secure the holding plug 11 and the first ferrule portion 9 to each other. Further, as a plurality of the engaging portions 33a and 11a is formed at predetermined intervals in the axial direction of the fixed shaft portion 33 and in the longitudinal direction of the holding plug 11 (the axial direction of the holding plug 11), the securing force between the fixed shaft portion 33 and the second ferrule portion 10, and the securing force between the holding plug 11 and the first ferrule portion 9 can be further increased. Note that, as the forms of the engaging portions 33a and 11a, protruding members or recessed members that are spirally wound around the periphery of the outer peripheral surfaces of the fixed shaft portion 33 and the holding plug 11 can be adopted. However, in a case where engaging portions are formed in a spiral shape, when the second ferrule portion 10 and the first ferrule portion 9 are deformed to have shorter diameters, and the inner peripheral surfaces of the second ferrule portion 10 and the first ferrule portion 9 are partially engaged with the engaging portions and are plastically deformed, the plastically deformable portions may flow in the axial directions of the fixed shaft portion 33 and the holding plug 11 along the spiral engaging portions, and the position of the fixed shaft portion 33 with respect to the second ferrule portion 10 and the position of the holding plug 11 with respect to the first ferrule portion 9 might be displaced. Therefore, as the forms of the engaging portions 11a and 33a, a plurality of engaging portions annularly formed in the circumferential direction of the outer peripheral surfaces of the fixed shaft portion 33 and the holding plug 11 is preferably formed at predetermined intervals in the axial direction of the fixed shaft portion 33 and the longitudinal direction of the holding plug 11 (the axial direction of the holding plug 11).

Also, by the method for manufacturing the container 1 according to the present invention, it is possible to absorb the dimensional change (a change in the axial dimension of the container main unit 2) that would be caused in a case where the container main unit 2 expands due to injection of a high-pressure liquid into the container, or in a case where the container main unit 2 contracts due to discharge of a high-pressure liquid in the container to the outside. Thus, it is possible to efficiently manufacture the container 1 that is capable of preventing stress concentration due to the dimensional change from occurring in the portion supporting the internal structure unit 3. Further, by the method for manufacturing the container 1 according to the present invention, it is possible to obtain the container 1 having a support structure in which at least part of the inner peripheral surface of the second ferrule portion 10 is plastically deformed and is engaged with the engaging portions 33a formed on the surface of the fixed shaft portion 33 of the internal structure unit 3, so that the fixed shaft portion 33 and the second ferrule portion 10 are firmly and stably secured in close contact with each other.

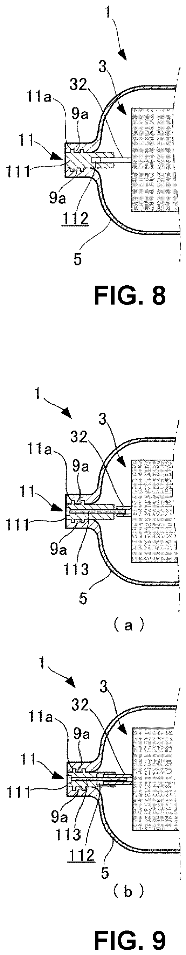

Although the container 1 and the method for manufacturing the container 1 according to one embodiment of the present invention have been described above, specific configurations thereof are not limited to the above embodiment. In the above embodiment, a rod-like shape having a circular cross-sectional shape has been described as an example of the form of the holding plug 11. However, as illustrated in Fig. 8, for example, the holding plug 11 may be designed to include a plug main unit 111 that is inserted into and secured to the communicating hole in the first ferrule portion 9, and a housing recess 112 formed at an insertion-side tip portion of the plug main unit 111. In a case where the holding plug 11 is designed to have such a configuration, for example, the tip side of the free shaft portion 32 of the internal structure unit 3 is inserted into and disposed in the housing recess 112. Thus, the free shaft portion 32 of the internal structure unit 3 is supported by the holding plug 11 so as to be movable along the axis of the base portion 4. Note that the inner diameter of the inner peripheral surface of this housing recess 112 is preferably such that the housing recess 112 can come into sliding contact with the tip portion of the free shaft portion 32.

Further, as illustrated in Fig. 9(a), the holding plug 11 can be designed to include the plug main unit 111 inserted into and secured to the communicating hole in the first ferrule portion 9, and a screw member 113 screwed into a through hole formed along the axis of the plug main unit 111. In a case where the holding plug 11 is formed to have such a configuration, the tip portion (the insertion-side tip portion) of the screw member 113 screwed into the through hole is designed to have a size to protrude from the plug main unit 111 inserted into and secured to the communicating hole. In a case where such a holding plug 11 is adopted, for example, the free shaft portion 32 of the internal structure unit 3 is also formed in a pipe-like shape, and the tip portion of the screw member 113 is inserted into and disposed in the inner hole of the pipe-like free shaft portion 32. Thus, the free shaft portion 32 of the internal structure unit 3 is supported by the holding plug 11 so as to be movable along the axis of the base portion 4. Alternatively, as illustrated in Fig. 9(b), the insertion-side tip portion of the plug main unit 111 may be designed to have the housing recess 112 in which the tip portion of the pipe-like free shaft portion 32 is housed. The inner diameter of the inner peripheral surface of this housing recess 112 is preferably such that the housing recess 112 can come into sliding contact with the tip portion of the free shaft portion 32. As such a housing recess 112 is provided, the free shaft portion 32 of the internal structure unit 3 can be more stably supported.

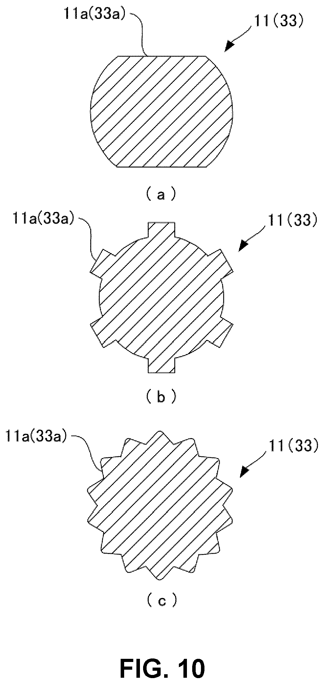

Also, the form of the engaging portions formed on the surfaces of the holding plug 11 and the fixed shaft portion 33 is not limited to the structure described above, and both a protruding member and a recessed member may be provided, for example. Alternatively, as illustrated in Fig. 10, in a cross-sectional view (a cross-section in a direction perpendicular to the longitudinal axis), the engaging portions may be designed to have the shape of a structure formed with two flat surfaces (Fig. 10(a)), a spline shape (Fig. 10(b)), a serration shape (Fig. 10(c)), or the like.

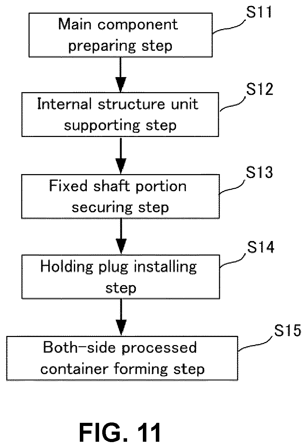

Also, in the embodiment according to the above method for manufacturing the container, after the holding plug 11 is inserted into and secured to the communicating hole Z6 in the ferrule portion Z7 of the one-side processed container Z3, the internal structure unit 3 is housed in the one-side processed container Z3 so that the free shaft portion 32 of the internal structure unit 3 is supported by the holding plug 11 so as to be movable along the axis of the base portion Z4, and a diameter reduction process is performed on the base portion Z4 on the opposite side from the side on which the ferrule portion Z7 of the one-side processed container Z3 is formed, so that the other tubular ferrule portion Z9 that supports the fixed shaft portion 33 of the internal structure unit 3 on the inner peripheral surface is formed. However, the present invention is not limited to such a manufacturing method. Specifically, as illustrated in a block diagram in Fig. 11, for example, the method may be designed to include a main component preparing step S11, an internal structure unit supporting step S12, a fixed shaft portion securing step S13, a holding plug installing step S14, and a both-side processed container forming step S15.

The main component preparing step S11 is a step of preparing: a one-side processed container Z3 that has a dome-shaped dome portion Z5 on one end side of a base portion Z4 having a cylindrical shape and a tubular ferrule portion Z7 that is formed along the axis of the base portion Z4 and has a communicating hole Z6 that is formed at the top portion of the dome portion Z5 and connects the inside and the outside; an internal structure unit 3 that is housed in the one-side processed container Z3, and has a free shaft portion 32 provided on one end side along the axis of the base portion Z4 and a fixed shaft portion 33 provided on the other end side along the axis of the base portion Z4; and a holding plug 11 that is movable relative to the free shaft portion 32 of the internal structure unit 3.

Here, the one-side processed container Z3 can be obtained by the method described above, and those having the configurations described above can be used as the holding plug 11 and the internal structure unit 3.

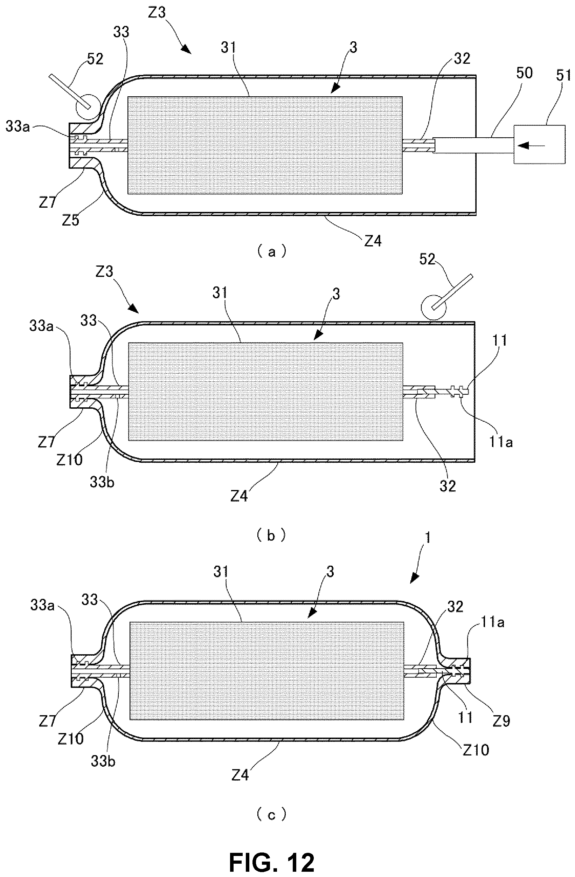

As illustrated in Fig. 12(a), the internal structure unit supporting step S12 is a step of housing the internal structure unit 3 in the one-side processed container Z3, inserting the fixed shaft portion 33 of the internal structure unit 3 into the communicating hole Z6 in the ferrule portion Z7, temporarily supporting the free end portion 32 of the internal structure unit 3, and supporting the internal structure unit 3 at both ends. Further, the outer peripheral surface of the base portion Z4 of the one-side processed container Z3 is held by a chuck device (not shown). Further, the method by which the free shaft portion 32 of the internal structure unit 3 is temporarily supported is not limited to any particular method, but, as illustrated in Fig. 12(a), for example, it is possible to support the free shaft portion 32 of the internal structure unit 3 by pressing the free shaft portion 32 with a support rod 50 and a pressing device 51.

The fixed shaft portion securing step S13 is a step of radially reducing and deforming the communicating hole Z6 of the ferrule portion Z7 by performing a diameter reduction process on the ferrule portion Z7 with a spinning processing device 52 or the like, and securing and supporting the fixed shaft portion 33 with the inner peripheral surface of the communicating hole Z6. The engaging portions 33a designed as protruding members or recessed members are provided on the surface of the fixed shaft portion 33. Therefore, due to the diameter reduction process, part of the inner peripheral surface of the ferrule portion Z7 plastically deforms and engages with the engaging portions 33a formed on the surface of the fixed shaft portion 33, and thus, the fixed shaft portion 33 is firmly and tightly secured to the ferrule portion Z7.

As illustrated in Fig. 12(b), the holding plug installing step S14 is a step of installing the holding plug 11 into the free shaft portion 32 of the internal structure unit 3 in a relatively movable manner. As the holding plug 11 is formed as a rod-like member in this example, the free shaft portion 32 of the internal structure unit 3 is formed in a pipe-like shape, and the holding plug 11 is inserted into the inner hole of the pipe-like free shaft portion 32. Thus, the holding plug 11 and the free shaft portion 32 are designed to be capable of moving relative to each other. Note that, as illustrated in Figs. 3(a) and 3(b) described above, a rod-like holding plug 11 having engaging portions 11a (engaging portions 11a formed as protruding members or recessed members) on the outer peripheral surface is preferably used as the holding plug 11. Here, the timing to carry out the holding plug installing step S14 is not limited to any particular timing, and the holding plug installing step S14 may be carried out when the fixed shaft portion securing step S13 is completed, or may be carried out before the internal structure unit supporting step S12 is carried out. The holding plug 11 may be already installed in the free shaft portion 32 when the fixed shaft portion securing step S13 is carried out. In a case where the holding plug installing step S14 is carried out before the internal structure unit supporting step S12 is carried out, the holding plug 11 installed in the free shaft portion 32 of the internal structure unit 3 is pressed with the support rod 50 and the pressing device 51, so that the side of the free shaft portion 32 of the internal structure unit 3 is supported.

The both-side processed container forming step S15 is a step of forming a both-side processed container by processing the remaining end surface of the one-side processed container Z3, with the internal structure unit 3 set in the base portion Z4. A diameter reduction process is performed on the base portion Z4 with the spinning processing device 52 or the like on the opposite side from the side on which the ferrule portion Z7 of the one-side processed container Z3 is formed, as illustrated in Fig. 12(c), so that a dome-shaped dome portion Z10 having another tubular ferrule portion Z9 at the top portion for supporting, with its inner peripheral surface, the outer peripheral surface of the holding plug 11 installed in the free shaft portion 32 of the internal structure unit 3 is formed. Through this both-side processed container forming step S15, the container 1 having the internal structure unit 3 therein is formed. The engaging portions 11a designed as protruding members or recessed members are provided on the surface of the holding plug 11. Therefore, when the other ferrule portion Z9 for supporting the holding plug 11 with the inner peripheral surface is formed by the diameter reduction process, part of the inner peripheral surface of the other ferrule portion Z9 plastically deforms and engages with the engaging portions 11a formed on the surface of the holding plug 11. Thus, the holding plug 11 is firmly secured to the other ferrule portion Z9. Note that, when the holding plug 11 is installed in the other ferrule portion Z9, it is preferable to carry out the both-side processed container forming step S15 while supporting the holding plug 11 with a support device (not shown) separately so as not to cause positional displacement of the holding plug 11 with respect to the ferrule portion Z9. Further, as a post-process to be performed after the both-side processed container forming step S15, a heat treatment step may be performed as necessary, to increase the fatigue endurance of the container 1. With such a manufacturing method, the effects described above can also be achieved.

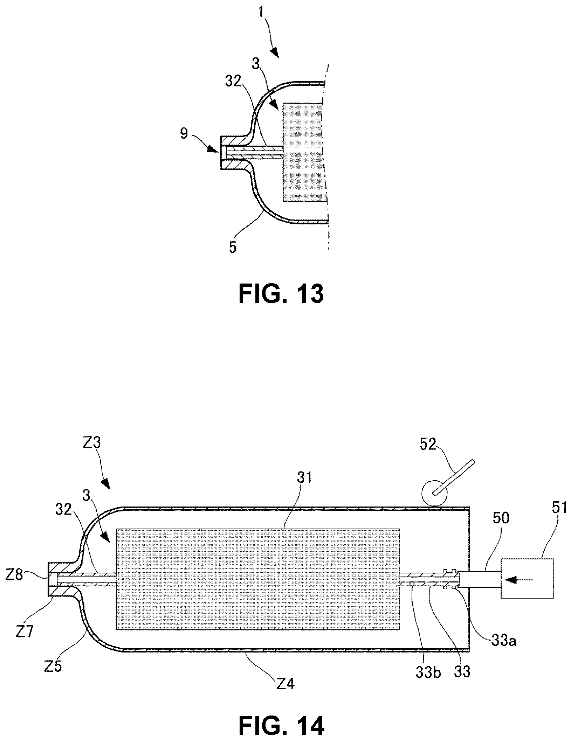

Also, in the above embodiment, the holding plug 11 is secured and supported in the communicating hole in the first ferrule portion 9, and the free shaft portion 32 of the internal structure unit 3 is supported so as to be movable (relatively movable) with respect to the holding plug 11 along the axis of the base portion 4. However, the present invention is not particularly limited to such a structure, and any structure can be adopted as long as the free shaft portion 32 of the internal structure unit 3 is supported so as to be movable (relatively movable) along the axis of the base portion 4 on the side of the first ferrule portion 9. For example, as illustrated in a schematic enlarged cross-sectional view of the relevant portions in Fig. 13, a structure in which the free shaft portion 32 of the internal structure unit 3 is slidably supported in the communicating hole in the first ferrule portion 9 can be adopted. In a case where such a structure is adopted, for example, a configuration in which a male screw portion is formed on an outer peripheral portion of the first ferrule portion 9, and a sealing plug is screwed onto the male screw portion to seal the first ferrule portion is adopted. Further, as the form of the free end portion 32, a pipe-like shape or a solid rod-like shape can be adopted. In a case where the free end portion 32 is formed in a pipe-like shape, a through hole (not shown) may be formed in a side surface of the free end portion 32 so that a fluid can be supplied into the container 1 or a fluid stored in the container 1 can be discharged to the outside via the through hole.

Further, in a case where a container is manufactured in the form illustrated in Fig. 13, for example, the holding plug securing step S2 is skipped with reference to the block diagram shown in Fig. 5, and as illustrated in Fig. 14, the internal structure unit supporting step S3 is designed so that the internal structure unit 3 is housed in the one-side processed container Z3, the free shaft portion 32 of the internal structure unit 3 is inserted into a communicating hole Z8 in the ferrule portion Z7 so as to be movable along the axis of the base portion Z4, the free end portion 32 is supported in the ferrule portion Z7, and the fixed shaft portion 33 of the internal structure unit 3 is temporarily supported so as to support the internal structure unit 3 at both ends. By carrying out the subsequent both-side processed container forming step S4 as described above, it is possible to obtain a container in which the support structure of the container main unit 2 for the internal structure unit 3 installed in the container main unit 2 is a one-free-end structure (a structure in which the free shaft portion 32 of the internal structure unit 3 is movable with respect to the communicating hole in the first ferrule portion 9).

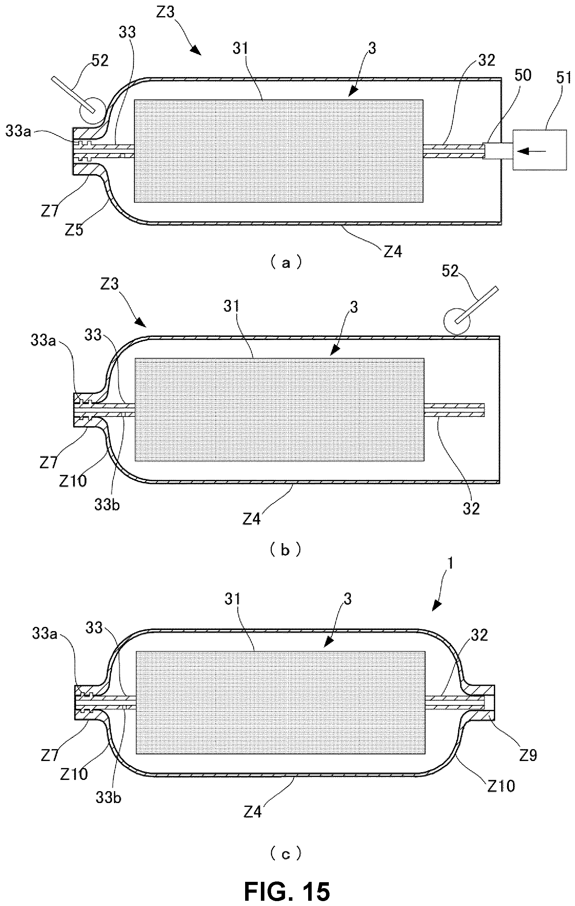

Further, as illustrated in the block diagram in Fig. 11 and in Fig. 12, in a case where the fixed shaft portion 33 of the internal structure unit 3 is inserted into the communicating hole Z6 in the ferrule portion Z7 of the one-side processed container Z3 to manufacture a container, the holding plug securing step S14 illustrated in Fig. 11 is skipped, and, as illustrated in Fig. 15, the both-side processed container forming step is designed to obtain a both-side processed container by performing a diameter reduction process with the spinning processing device 52 or the like on the base portion Z4 on the opposite side from the side on which the ferrule portion Z7 of the one-side processed container Z3 is formed, and thus form the dome-shaped dome portion Z10 having the other tubular ferrule portion Z9 at the top portion that supports the free shaft portion 32 of the internal structure unit 3 so as to be movable along the axis of the base portion Z4.

### DESCRIPTION OF REFERENCE SIGNS

- 1: container
- 2: container main unit
- 3: internal structure unit
- 31: structure main unit
- 32: free shaft portion
- 33: fixed shaft portion
- 33a: engaging portion
- 4: base portion
- 5,6: dome portion
- 7,8: communicating hole
- 9: first ferrule portion
- 9a: plastically deformable portion
- 10: second ferrule portion
- 10a: plastically deformable portion
- 11: holding plug
- 11a: engaging portion
- 111: plug main unit
- 112: housing recess
- 113: screw member
- Z1: short material tube member
- Z2: long material tube member
- Z3: one-side processed container
- Z4: base portion
- Z5: dome portion
- Z6: communicating hole
- Z7: ferrule portion
- Z8: plastically deformable portion
- Z9: other ferrule portion
- Z 10: dome portion
- S1: main component preparing step
- S2: holding plug securing step
- S3: internal structure unit supporting step
- S4: both-side processed container forming step
- S11: main component preparing step
- S12: internal structure unit supporting step
- S13: fixed shaft portion securing step
- S14: holding plug installing step
- S15: both-side processed container forming step

## Claims

1. A container comprising: a container main unit that includes a cylindrical base portion, dome portions that have a dome-like shape and are provided at both ends of the base portion, and a tubular first ferrule portion and a tubular second ferrule portion that have communicating holes formed at top portions of the respective dome portions to connect inside and outside, and are formed along an axis of the base portion; and an internal structure unit that is housed in the container main unit, wherein
the internal structure unit includes a free shaft portion provided on one end side along the axis of the base portion, and a fixed shaft portion provided on the other end side along the axis of the base portion,
the free shaft portion is supported on a side of the first ferrule portion so as to be movable along the axis of the base portion,
the fixed shaft portion is secured and supported in the communicating hole in the second ferrule portion via an engaging portion formed on a surface of the fixed shaft portion, and
at least part of an inner peripheral surface of the communicating hole in the second ferrule portion includes a plastically deformable portion to be engaged with the engaging portion.

2. The container according to claim 1, wherein the engaging portion is one of a protruding member or a recessed member formed on the surface of the fixed shaft portion.

3. The container according to claim 1 or 2, wherein the engaging portion is formed in an annular shape in a circumferential direction of the fixed shaft portion.

4. The container according to any one of claims 1 to 3, wherein a plurality of the engaging portions is formed in an axial direction of the fixed shaft portion.

5. A method for manufacturing a container, comprising:
a main component preparing step of preparing a one-side processed container that includes a dome-shaped dome portion on one end side of a cylindrical base portion, and a tubular ferrule portion that has a communicating hole formed at a top portion of the dome portion and connecting inside and outside, the tubular ferrule portion being formed along an axis of the base portion, and an internal structure unit that is housed in the one-side processed container, and has a free shaft portion provided on one end side along the axis of the base portion and a fixed shaft portion provided on the other end side along the axis of the base portion;
an internal structure unit supporting step of supporting the internal structure unit at both ends by housing the internal structure unit in the one-side processed container, supporting the free shaft portion of the internal structure unit on a side of the ferrule portion so as to be movable along the axis of the base portion, and temporarily supporting the fixed shaft portion of the internal structure unit; and
a both-side processed container forming step of forming a both-side processed container by performing a diameter reduction process on the base portion on an opposite side from a side on which the ferrule portion of the one-side processed container is formed, to form a dome-shaped dome portion that has, at a top portion, another tubular ferrule portion for supporting the fixed shaft portion of the internal structure unit with an inner peripheral surface, wherein
the both-side processed container forming step includes plastically deforming at least part of an inner peripheral surface of the another ferrule portion, to engage and secure the at least part of the inner peripheral surface of the another ferrule portion with and to an engaging portion formed on a surface of the fixed shaft portion.

6. A method for manufacturing a container, comprising:
a main component preparing step of preparing a one-side processed container that includes a dome-shaped dome portion on one end side of a cylindrical base portion, and a tubular ferrule portion that has a communicating hole formed at a top portion of the dome portion and connecting inside and outside, the tubular ferrule portion being formed along an axis of the base portion, and an internal structure unit that is housed in the one-side processed container, and has a free shaft portion provided on one end side along the axis of the base portion and a fixed shaft portion provided on the other end side along the axis of the base portion;
an internal structure unit supporting step of supporting the internal structure unit at both ends by housing the internal structure unit in the one-side processed container, inserting the fixed shaft portion of the internal structure unit into the communicating hole in the ferrule portion, and temporarily supporting the free shaft portion of the internal structure unit;
a fixed shaft portion securing step of securing and supporting the fixed shaft portion of the internal structure unit with an inner peripheral surface of the ferrule portion by performing a diameter reduction process on the ferrule portion; and
a both-side processed container forming step of forming a both-side processed container by performing a diameter reduction process on the base portion on an opposite side from a side on which the ferrule portion of the one-side processed container is formed, to form a dome-shaped dome portion that has, at a top portion, another tubular ferrule portion for supporting the free shaft portion of the internal structure unit so as to be movable along the axis of the base portion, wherein
the fixed shaft portion securing step includes plastically deforming at least part of the inner peripheral surface of the ferrule portion, to engage and secure the at least part of the inner peripheral surface of the ferrule portion with and to an engaging portion formed on a surface of the fixed shaft portion.

7. A method for manufacturing a container, comprising:
a main component preparing step of preparing a one-side processed container that includes a dome-shaped dome portion on one end side of a cylindrical base portion, and a tubular ferrule portion that has a communicating hole formed at a top portion of the dome portion and connecting inside and outside, the tubular ferrule portion being formed along an axis of the base portion, an internal structure unit that is housed in the one-side processed container, and has a free shaft portion provided on one end side along the axis of the base portion and a fixed shaft portion provided on the other end side along the axis of the base portion, and a holding plug that is movable relative to the free shaft portion;
an internal structure unit supporting step of supporting the internal structure unit at both ends by housing the internal structure unit in the one-side processed container, inserting the fixed shaft portion of the internal structure unit into the communicating hole in the ferrule portion, and temporarily supporting the free shaft portion of the internal structure unit;
a fixed shaft portion securing step of securing and supporting the fixed shaft portion of the internal structure unit with an inner peripheral surface of the ferrule portion by performing a diameter reduction process on the ferrule portion;
a holding plug installing step of installing the holding plug in the free shaft portion of the internal structure unit in a relatively movable manner; and
a both-side processed container forming step of forming a both-side processed container by performing a diameter reduction process on the base portion on an opposite side from a side on which the ferrule portion of the one-side processed container is formed, to form a dome-shaped dome portion that has, at a top portion, another tubular ferrule portion for supporting the holding plug installed in the free shaft portion of the internal structure unit with an inner peripheral surface, wherein
the fixed shaft portion securing step includes plastically deforming at least part of the inner peripheral surface of the ferrule portion, to engage and secure the at least part of the inner peripheral surface of the ferrule portion with and to an engaging portion formed on a surface of the fixed shaft portion.

8. The method for manufacturing a container, according to any one of claims 5 to 7, wherein the engaging portion is one of a protruding member or a recessed member formed on the surface of the fixed shaft portion.

9. The method for manufacturing a container, according to any one of claims 5 to 8, wherein the engaging portion is formed in an annular shape in a circumferential direction of the fixed shaft portion.

10. The method for manufacturing a container, according to any one of claims 5 to 9, wherein a plurality of the engaging portions is formed in an axial direction of the fixed shaft portion.
